(19) Europäisches Patentamt
European Patent Office
Office européen des brevets

(11) Publication number: **0 171 168 B1**

(12) **EUROPEAN PATENT SPECIFICATION**

(45) Date of publication of patent specification: **22.01.92**

(51) Int. Cl.$^5$: **C09C 1/42**, C09D 7/12, C09C 3/08, D21H 19/00

(21) Application number: **85304659.7**

(22) Date of filing: **28.06.85**

# (54) Nonionic surfactant treated clays, methods of making same, water-based paints, organic solvent-based paints and paper coatings containing same.

(30) Priority: **11.07.84 US 629606**

(43) Date of publication of application:
**12.02.86 Bulletin 86/07**

(45) Publication of the grant of the patent:
**22.01.92 Bulletin 92/04**

(84) Designated Contracting States:
**DE FR GB**

(56) References cited:
**FR-A- 2 187 865**
**FR-A- 2 289 586**
**US-A- 3 804 656**

(73) Proprietor: **ENGELHARD CORPORATION**
**70 Wood Avenue South CN 770**
**Iselin New Jersey 08830(US)**

(72) Inventor: **Dixon, Dan M.**
**P.O. Box 362**
**Gordon Georgia 31031(US)**
Inventor: **Drexel, Richard J.**
**P.O. Box 121**
**Irwinton Georgia 31042(US)**

(74) Representative: **Geering, Keith Edwin et al**
**REDDIE & GROSE 16 Theobalds Road**
**London WC1X 8PL(GB)**

**EP 0 171 168 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to methods for treating kaolin clays for the purpose of obtaining improved dried paint film gloss when incorporated in organic solvent-based and water-based paint formulations and for the purpose of imparting improved gloss ink holdout in paper coating films. Numerous attempts have been made in the prior art to provide a filler clay material which when used as a high gloss filler for alkyd paints, latex paints, and paper coatings, provides improvement in sheet optical quality and in gloss ink holdout properties, and requires less total coating solids.

Names used herein which are Registered Trade Marks are identified at the end of this description.

It is conventional to use inexpensive particulate materials such as refined clays and calcium carbonate to provide increased opacity in paints and paper. Various methods of improving the opacity, brightness, and gloss, among other properties of pigments and fillers, are known to those skilled in the art. In particular, titanium dioxide additions to coating systems containing pigments and fillers of low refractive indices substantially improved the opacities of those coating systems.

Clay is advantageously used as the entire mineral extender, in paints and coatings. Other typical extender materials include calcium carbonate, diatomaceous earth, and asbestine.

The mineral extenders of moderate cost that are generally commercially employed are the purified high kaolinite clays.

Methods of producing kaolin pigments are shown in U. S. Patent No. 3,615,806. The kaolin pigment is obtained by delaminating kaolin clay particles of not less than five microns e.s.d. and then removing particles of less than two microns e.s.d., so that the remainder is the product used. The product is then dried and pulverized to produce the final product which is useful in exterior paints. The product will disperse in both aqueous and non-aqueous systems without any special chemical surface treatment. The resultant product has superior enamel holdout and hiding in the applied paint film, which thus has a very uniform low sheen. In a test paint formulation the product of the above-mentioned U. S. patent includes titanium dioxide, kaolin clay, Igepal 610, ethylene glycol, $NH_4OH$ as well as other ingredients. Although Igepal 610 is used in the final test paint formulation, there is no disclosure or suggestion of surface treating the clay particles with any surfactant prior to using the particles in the formulation of paints. In any event, this patent teaches away from the present invention by suggesting that surface treatment of clay with surfactants renders it useless in aqueous systems. Furthermore, the paints produced by this prior patent have a low sheen, not the improved gloss provided by this invention.

In U. S. Patent No. 3,453,131, clay particles having a negative electrical charge are adhered to functional colloidal pigment particles by aliphatic organic acid which acts as a coupling agent. The composite particles are formed in aqueous suspension which can be used, or dried composite particles may be recovered. This is useful in cosmetic preparations, paint formulations, or wherever clay is used as a carrier for another particle used for coloration. There is no disclosure in this patent of the treatment of clay with a nonionic surfactant.

We have invented a method of treating clay and the resultant clay product which will produce a pigment or extender having unexpectedly, significantly improved glossing characteristics in organic systems, and also yields high gloss in water-latex systems. The novel clay product has improved dispersion properties in organic paint systems over similar clays not so treated. Also, the novel clay product will develop higher 20° angle gloss measurements in organic paint systems than a similar clay not so treated. The novel clay product has improved dispersion properties in organic paint systems over similar clays not treated. Furthermore, when used in a coating on calendered sheets, e.g., paper, significant improvement in gloss ink holdout properties and improved regular gloss is obtained compared to a product using a clay that has not been treated according to the present invention. The characteristics of the novel clay final product make it well suited for pigment, extender, or filler applications.

The improved clay products useful in organic solvent-based paints and water-based paints to improve the gloss of dried films thereof and in paper coating to improve the gloss ink holdout properties of paper coated therewith comprise a mixture of kaolin clay particles [of the desired particle size] and surfactant which consists essentially of an effective amount of non-ionic surfactant compatible with water and oil and having an HLB value in the range of 3 to 15, preferably 5 to 14. Suitable nonionic surfactants fitting this description are well known to those skilled in the pigments, fillers (extenders) and coatings arts.

One type of nonionic surfactant useful in this invention includes the nonylphenoxypoly(ethyleneoxy) ethanol compounds having the average formula:

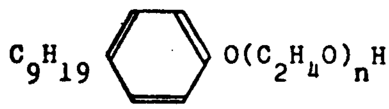

(I)

wherein n is a number of 4 to 12, preferably 7 to 9, and the compound has an HLB value of 3 to 15, preferably 5 to 14. Specific surfactants of this type are the Igepals made and sold by GAF Corp. of Charlotte, North Carolina, including Igepal 610 - of formula (I) above in which n has an average value of about 7.82, having an HLB of 12.2; Igepal CO-210 of formula (I) wherein n has an average value of about 1.33, having an HLB of 4.6; Igepal CO-520 of formula (I) wherein n has an average value of about 5.4,having an HLB of 10.0; and Igepal CO-720 of formula (I) wherein n has an average value of about 12.9, having an HLB of 14.2.

Another type of nonionic surfactant useful in this invention includes the condensates of ethylene oxide with hydrophobic condensates of propylene oxide and propylene glycol. This type of nonionic surfactant can be depicted by the average formula:

$HO(C_2H_4O)_x(C_3H_6O)_y(C_2H_4O)_zH$ (II)

in which x, y and z are numbers of such relative values as to provide an HLB value in the range of 3 to 15, preferably in the range of 5 to 14. Specific surfactants of this type include the Pluronics sold by BASF Wyandotte Industrial Chemical Group, specifically Pluronic L-72 having an HLB of 6.5, Pluronic L-31 having an HLB of 4.5, and Pluronic L-64 having an HLB of 15. The Pluronics, however, may present an odor problem when clay products containing them are spray dried or when they are otherwise subjected to elevated temperatures and thus they are less preferred than the Igepals such as Igepal 610.

The proportion of nonionic surfactant in the mixture of clay and surfactant is not narrowly critical and can range upwardly from a minimum effective amount, that is, the minimum amount that provides improvement in gloss of dried films of coatings (oil-based or water-based) using the mixture or in gloss ink holdout properties of paper coatings using said mixture. There is no sharp upper limit on the relative amount of nonionic surfactant used in the mixtures, although, because of cost considerations, the lowest optimum amount of surfactant will usually be used. Numerically, the amount of nonionic surfactant can vary e.g. from a minimum effective amount up to about 5 (preferably up to about 2) weight % based on the combined weight of clay and nonionic surfactant in the mixture. Preferably the amount of nonionic surfactant is from about 0.75 to about 1.25 weight % on the same weight basis.

Other examples of nonionic surfactants having an appropriate HLB value falling within the above-described ranges can be found by reference to standard publications such as McCutcheon's 1982: Combined Edition, published by McCutcheon's Division MC Publishing Company, 175 Rock Road, Glen Rock, New Jersey 07452, or earlier editions such as McCutcheon's: Detergents and Emulsifiers, published by Allured Publishing Company, Ridgewood, New Jersey, 1974. In addition, trade publications such as "Technical Data on Pluronic Polyols", OS 796, published by BASF Wyandotte Corporation, Organic Specialties & Fine Chemicals Dept., Parsippany, New Jersey 07054, can be consulted for further examples of nonionic surfactants usable in this invention.

The clay used in the mixtures of this invention can be of any suitable type that has been mined and refined in conventional ways to filler, extender or pigment grade for paints or paper coatings. For best results, a high brightness, small particle size kaolin clay is preferred. Clays having a TAPPI brightness of 80 or more, preferably 90 or more, and having a particle size of at least 65%, preferably at least 90%, below 2 microns can be employed in the mixtures. It is also preferred to use a clay which does not contain substantial amounts of soluble salts; for example, the preferred clay contains less than 0.2 weight % soluble salts. It is also preferred that the clay have a Hegman value of about 5 to about 6 when mixed in dry form with raw linseed oil and drawn down on a Hegman gauge (Gardner, Model No. GG64048) scaled from 0 to 8 equal segments and measuring the number of the segment where separation of high grit area from mostly grit-free area occurs.

Kaolin clay useful in this invention is generally obtained by well known processes in which the crude clay is degritted, screened, refined by electromagnetic separation, flotation and/or chemical means. Thereafter, the refined clay is classified by particle size, or delaminated, and then bleached and filtered. Optionally, the refined clay thus obtained can be dried and/or calcined prior to treatment with the nonionic surfactant pursuant to this invention, although, for economic reasons, it is satisfactory to treat the wet clay filter cake directly with nonionic surfactant before drying or calcining.

The method for making the novel clay product of this invention is easy to carry out and simply comprises the steps of mixing an aqueous slurry of clay particles and an effective amount of nonionic surfactant which is compatible with water and oil and has a HLB within the range of 3 to 15, preferably 5 to 14, and thereafter drying the resulting mixture to provide the desired clay product. The clay slurry can he prepared in any suitable manner; for example, it can be prepared by mixing clay filter cake with a suitable amount of water to provide a slurry that is convenient to handle. Typically, slurries containing 40 to 66 weight % clay solids are useful in the method. The slurry can instead be made up by adjusting the water content of the clay slurry after magnetic separation or flotation or other chemical purification of the crude clay,or the slurry from classifiers and/or delaminators can be used with appropriate adjustment to provide a slurry that can be readily handled. There is no advantage in preparing the slurry from dried clay or calcined clay and there are economic disadvantages in doing so. Nevertheless, if so desired, the slurry can be prepared from dried or calcined clay. Further, the clay slurry before or after the bleaching step in the usual refining of clay can be employed with suitable adjustments in solids by the addition or removal of water.

In order to maintain an adequate amount of fluidity to enable ease of handling of the slurry, it is preferable to add alkaline material, e.g. for purposes of deflocculation. Many alkaline materials serve as dispersing agents for this purpose such as tetrasodium pyrophosphate otherwise known as TSPP. In those instances where it is desired to maintain the soluble salt content in the clay product as low as possible, it is preferred not to use TSPP or any other salt additive or salt forming additive. In such cases ammonium hydroxide or ammonia is used, with subsequent heating of the clay driving off the volatile alkaline material leaving little or no soluble salt. For this reason, ammonium hydroxide is preferred and it has been found to be useful within the range of 0.15 to 0.3 weight % based on the dry weight of the clay, although amounts above or below this range are also suitable.

The nonionic surfactant is added to the alkalinized clay slurry and stirred for a short period of time until the slurry is substantially homogeneous. If stirring proves to be difficult because of thickness of the slurry, additional amounts of alkaline material can be added. The slurry can be used with or without further modification in coating formulations, e.g. water-based paint formulations and/or paper-coating formulations.

It is usual practice, however, for the clay refinery to spray dry the slurry to reduce the water content to a low level, e.g. not more than 5 weight % moisture, preferably not more than 1 weight % moisture and most preferably not more than 0.1 weight % moisture based on the dry weight of the clay. The resulting product is then sold in dry form or it can be further pulverized to provide a desirable Hegman grind value. As pointed out above, a suitable Hegman value is 5 to 6 although, depending upon the application of the clay product, other Hegman grind values are suitable.

It is believed that the dried product, that is, one containing not more than 5 % moisture comprises particles of clay which are at least partially coated with the nonionic surfactant as described above.

A process used to produce surface treated clay pursuant to this invention for use in a paint or paper coating formula is exemplified as follows:

(1) Meter an appropriate amount of clean well water into a suitable size cone bottom tank, equipped with a propeller agitator and valve in the bottom.

(2) With continuous agitation, add slowly a suitable amount of concentrated $NH_4OH$.

(3) Then slowly add the refined kaolin clay (e.g. Freeport wet Al-Sil-Ate HO-90 acid filter cake).

(4) When the above mixture becomes homogeneous, slowly add the Igepal CO-610 (or other nonionic surfactant) and mix until the slurry is again homogeneous.

(5) Pump the above mixture to a gas fired utility Niro spray dryer where the mixture is dried to the desired moisture level, e.g., until it contains less than 5% moisture. The dried treated product is then collected.

(6) Pulverize (or Bauer mill) the material obtained from step 5 using processing conditions that yield the desired Hegman value, e.g., 5 to 6 Hegman grind test value, in the product.

(7) The product is collected and is then ready for use in paint or paper formulae.

Wetting agents of the low foaming, oil soluble, nonionic surfactant type, such as Igepal CO-610, Pluronic L-72 and others as mentioned hereinabove, yield a final clay product that is more "oil-loving" (oleophilic) and wets-out more easily than does regular Al-Sil-Ate HO-90.

The dry, finely ground kaolin clay product produced by the method of this invention can have a very fine particle size, 92% below 2 microns, and be characterized by a TAPPI brightness of at least 90. These products are very well suited for use as pigments or fillers in the manufacture of paper or paints.

The treated kaolin clay of the present invention is useful for development of high gloss in organic solvent type paint systems and also develops improved gloss and high viscosity in water based paint systems to aid in the prevention of wet paint film sag on vertical surfaces. In paint systems, the clay product of the present invention is capable of developing higher 20° angle gloss measurements in organic

paint systems than the same clay not treated with the Igepal CO-610 or similar nonionic wetting agents. The clay of the present invention has improved dispersion properties over similar clays in organic paint systems not having the necessary treatment with nonionic surfactant.

In paper products, the clay of the present invention provides improvement in gloss ink holdout properties as well as slightly improved regular gloss (no ink or not printed) of coated calendered sheets as compared to a similar product using clay which has not been surface treated according to the present invention.

The Hegman grind measurement is performed to ensure the provision of a final treated clay product which is of benefit to the paint manufacturer in that less mechanical mixing is required in order to produce an acceptable paint. Therefore, from this commercial standpoint the Hegman grind measurement is important; nonetheless, the clay product of the present invention may be subjected to grinding operations to Hegman grind measurements other than that preferred and still result in a useful clay product.

The coating materials of this invention containing the clay product produced in the manner described above in accordance with this invention generally comprise a binder, a volatilizable vehicle and a filler including the clay product. Suitable binders are well known in the paint industry and paper coating industry. For example, in an oil-based paint, the binder can comprise any one or mixture of drying oils including oily organic liquids or unsaturated fatty oils which, when applied to a surface as a thin film, readily absorb oxygen from the air and form tough elastic substances by "drying", i.e. by hardening or solidifying through oxidative reactions involving the interaction by oxygen in the air with the unsaturated sites in the drying oil molecule. It is currently believed that the "drying" process involves polymerization of conjugated diene or triene groups through a Diels-Alder type addition. Drying oils typically belong to the linolenic acid group of triglyceride esters. Synthetic drying oils are known but the most common drying oils are natural products obtained from soybean, candle nut, linseed, hemp, grapefruit seed, orange seed, English walnut, wheatgerm and any of the usual tung oil sources. Drying oils are also obtained from fish oils and dehydrated castor oils.

Especially useful binders for oil-based paint purposes include the drying oil alkyds such as the long-oil soya alkyds. The oil-based paints pursuant to this invention also contain a volatilizable liquid such as mineral spirits or other suitable volatilizable solvent for the drying oil or drying oil alkyd and vehicle for the pigment and/or filler.

In addition to the clay product of this invention included in the coating materials of this invention as filler, there can also be used conventional fillers and pigments such as titanium dioxide and other commonly used fillers and pigments. Additionally, the oil-based pigments of this invention can include drying metal salts such as calcium naphthenate. Furthermore, the oil-based paints can also include anti-skin agents, loss of dry inhibitors and any other additives conventionally used for oil-based paints.

The water-based paints of this invention include binders which are suspensions of polymeric polymers such as vinylacetate-N-butylacrylate copolymers or other acrylic resins and copolymers suspended in an aqueous medium in which the pigment and/or filler is also suspended. The clay product of this invention is easily dispersible in the water-based paint composition and can be substituted for part or all of the pigment heretofore employed in such water-based paint compositions. A wide variety of additives as heretofore employed in water-based paints such as thickeners, anti-fungus agents and the like can be added to the water-based compositions.

The clay products of this invention can be used in conventional paper coating compositions in place of some or all of the pigment or filler heretofore employed in such compositions. Paper coating compositions normally contain a binder such as a coalescable organic polymer such as styrene divinylbenezene copolymers, acrylic resins and other vinyl addition polymers and copolymers as well as natural binders including starch. Upon drying the particles of polymer coalesce on the paper surface and around the pigment and filler particles to form a strongly adhering coating on the paper. Paper coating compositions can include other materials such as thickeners including carboxy methyl cellulose and other similar materials.

The following Examples are presented wherein abbreviations used are as below:

| | |
|---|---|
| sec | second |
| min | minute |
| hr | hour |
| lb | pound (0.454 kg) |
| t | short ton of 2,000 lb (908 kg) |
| um | micron (micrometer) |
| ft | foot (0.305 m) |
| M | mesh, U. S. standard sieve designation |

| | |
|---|---|
| ml | milliliter |
| gal | U. S. gallon (3.79 ℓ) |
| g | gram |
| % | percent, by weight unless otherwise indicated |
| kG | kilogauss, unit of magnetic intensity |
| brightness | TAPPI brightness as measured with a Technidyne Model S-4 Brightness Tester |
| % -2 um | % of particles of a size less than 2 um as measured with a Micromeritics Sedigraph 5000 |
| % grit | % particles in a sample having a size greater than 44 um (325 M) |
| PVC | pigment volume concentration |

$$= \frac{\text{Volume of Pigment}}{\text{Volume of pigment + Volume of binder}}$$

wherein pigment is taken to include filler and extender as well as pigment, e.g., it includes $TiO_2$, talc, clay, calcium carbonate and any other solid particle other than binder particles contained by the paint.

The improved clay for use in organic paint formula is more "oil-loving" (oleophilic) and wets out more easily than does regular Al-Sil-Ate HO-90. The clay is kaolin clay and is useful as a pigment for use as a high gloss filler for alkyd paints, latex paints, and paper coatings. The clay yields high gloss in water-latex systems, and yields improved dried film gloss in organic paint formulas. Gloss values given hereinafter were determined pursuant to ASTM D523.

The 20° gloss values given in the Examples below are only comparable within each example or example grouping. For instance, the 20° gloss values given in Example 2 are comparable with each other but not with the 20° gloss values given in other Examples. In another instance, the 20° gloss values given for the Example grouping of Example 3, A and B are comparable with each other but not with the values given for other Examples or Example groupings. The 20° gloss values given within any particular Example or Example grouping were obtained on films produced by simultaneous drawdowns on the same drawdown sheet. Also, in some Examples or Example groupings, a sensor head different from that used in other Examples or Example groupings were used.

EXAMPLE 1

(A) A product of the present invention was produced according to one preferred embodiment as follows; 30.32ℓ(8 gal) of clean well water were metered into an appropriate size cone-bottom tank, equipped with a propeller agitator and valve in the bottom of the tank. With continuous agitation, 68.1 g (0.15 lb) of concentrated $NH_4OH$ (about 30 wt. % $NH_3$) was slowly added. It is desired that as little $NH_4OH$ as possible be added, and in a preferred process most of that $NH_4OH$ is lost upon drying which helps achieve a low soluble salt content in the final product. This is important in automotive primers for electro-deposition to prevent blistering.

The amount of ammonium hydroxide used was approximately 0.15% of the concentrated ammonium hydroxide solution based on dry weight of the kaolin feed stock. The ammonium hydroxide was used to provide the 65% solids slurry with sufficient fluidity to allow it to be pumped to the spray dryer atomizer. Low slurry solids, for example about 50% solids, would require somewhat less ammonium hydroxide for acceptable fluidity. The range of ammonium hydroxide used may vary from 0.1% or less to 0.3% or more in the preferred embodiment. In those cases where the presence of significant amounts of soluble salts can be tolerated, other alkaline materials, e.g., TSPP, sodium hydroxide and the like, can be used in place of ammonium hydroxide.

With continuous agitation, 64.88 kg(142.9 lbs) of wet clay (Al-Sil-Ate HO-90 acid filter cake) having 70% solids (45.4 kg dried divided by .7 equals 64.88kg wet filter cake) were added to the aqueous ammonium hydroxide solution. The clay filter cake was relatively free of soluble salts.

Average values of the physical properties of the clay filter cake used are shown in Table 1 below:

Table 1

| Physical Properties Average Values: | |
|---|---|
| Fineness - over 44 µm particle size (residue on 325 mesh) | 0.01% |
| Particle Size (Below 2 micrometers) | 92% |
| Median Particle Size (micrometers) | 0.5 |
| TAPPI Brightness (TAPPI 646 os-75) | 90 - 92% |
| Elrepho Brightness ISO (TAPPI 534 pm-76) | 88 - 90% |
| Oil Absorption (ASTM D281) | 40 - 45 g. |
| pH, 10% Solids | 6.0 - 8.0 |
| Free Moisture (Dry Clay) | 1.0% Maximum |
| Specific Gravity | 2.62 |
| Bulking ℓ/kg (gallons/lb.) | 0.383 (0.0459) |
| Refractive Index | 1.56 |
| Shipping Solids for Slurry | 69.5 - 70.5% |
| Weight per Volume of Slurry @ 70% Solids | 1.76 kg/ℓ (14.7 lb/gal) |
| Dry Clay Weight per volume @ 70% Solids | 1.23 kg/ℓ (10.3 lb/gal) |

A typical chemical analysis of the clay filter cake is shown in Table 2 below:

TABLE 2

| | |
|---|---|
| $Al_2O_3$ | 39.04% |
| $SiO_2$ | 45.94% |
| $Na_2O$ | 0.24% |
| $TiO_2$ | 0.45% |
| CaO | 0.03% |
| $Fe_2O_3$ | 0.40% |
| MgO | 0.02% |
| $K_2O$ | 0.08% |
| Ignition Loss | 13.80% |

The mixture of clay, water and $NH_4OH$ was then agitated until homogeneous. When homogeneous, 0.454 kg (1 lb) of Igepal CO-610 was added slowly with continuous agitation until the slurry was again homogeneous. If the Igepal CO-610 is added rapidly, a slight thickening may result.

The above-described mixture of water, $NH_4OH$, acid clay filter cake, and Igepal CO-610 was sufficiently agitated until homogeneous. Thereafter it was pumped to a pilot plant, gas-fired, utility Niro spray dryer wherein the mixture was dried to 0.5% moisture or less.

The dried product was then pulverized (e.g. Bauered in a Bauer disk mill) using process conditions necessary to yield a product having a 5 to 6 Hegman grind test value.

The product was collected and was suitable for use in paint or paper formulae. The product has the physical and optical properties as shown in Table 3.

TABLE 3

| | |
|---|---|
| Brightness, Tappi (1) | 90.0 |
| Particle Size | 100% below 3.8 micrometers |
| | 92% " 2.0 " |
| | 75% " 1.0 " |
| | 55% " 0.5 " |
| | 30% " 0.25 " |
| pH-10% Solids in Water | 5.0 - 6.0 |
| % Soluble Salts | 0.2 |
| Hegman Grind (2) | 5.0 - 6.0 |
| Oil Absorption (3) | 42-46 |

(1) TAPPI Provisional Method (1976) T 534, Appendix using filter designated "A".

(2) Measured by mixing dry sample in raw linseed oil, placing the mixture in a small cavity, scraping it from the cavity down a slot scaled from 0 to 8 equal segments, and measuring the number of the segment where separation of high grit area from mostly grit-free area occurs.

(3) ASTM D281-31.

EXAMPLE 2

An oil-based gloss alkyd enamel (35 PVC) was prepared by first mixing at low speed the liquid ingredients given in Table 4 below in a high shear Premier Mill. The solids set forth in Table 4 below were thereafter added to the liquids and the mixing was continued at high speed to grind the ingredients together. When a uniform mix was attained the ingredients given in Table 5 were added in the order listed and mixing was continued until a uniform mixture was obtained. Thereafter, the resulting paint was pulled down on a standard drawdown sheet using a standard drawdown bar and equipment to provide a 0.76 mm (3 mℓ) coating. A comparison paint was prepared in the same manner using Al-Sil-Ate HO-90 acid filter cake (the starting material in Example 1) as extender in place of the treated clay product of Example 1, and was also drawn down on the same drawdown sheet in the same manner as described hereinabove. The paints drawn down on the drawdown sheet as described above were allowed to dry for two or three days. Thereafter, the 20° gloss values were measured (ASTM D523) using a Gardner apparatus in which light is directed on to the dry coating of paint at a 20° angle from the vertical and the reflected light is measured by a sensor head looking straight down at the dried paint coating. In the case of the paint made with the clay product of Example 1, the 20° gloss value was 40 to 50 whereas that of the comparison paint was only 20 to 30.

TABLE 4

| Materials | g/ℓ | (Lbs./100 Gal.) |
|---|---|---|
| Rutile $TiO_2$ | 300 | (250) |
| Clay (Example 1) | 300 | (250) |
| Aluminum Stearate | 2.4 | (2.0) |
| Loss of Dry Inhibitor (1) | 3.6 | (3.0) |
| Aroplaz 1266-M-70 (2) | 434 | (362) |

(1) Nuact NOPB (Tenneco) lead-free metal salt of organic acid in solution.
(2) A long-oil soya alkyd as a 70% solids solution in mineral spirits (2.0 mm Hg vapor pressure) and having a viscosity of 23-36 Stokes at 25°C, an acid value (solids) of 5 to 10, and a Gardner color of 7 max.

TABLE 5

| Materials | g/ℓ | (Lbs./100 Gal.) |
|---|---|---|
| Aroflat 3113-P-30 (3) | 240 | (200) |
| Mineral Spirits | 36 | ( 30) |
| 6% Ca Naphthenate | 6 | (5.0) |
| 6% Cobalt Naphthenate | 3.6 | (3.0) |
| 6% Zirconium Naphthenate | 6 | (5.0) |
| Anti Skin Agent (4) | 2.4 | (2.0) |

(3) A modified oxidizing alkyd as a 30% solids solution in Type 140 solvent, and having a viscosity of 6.3 to 18 stokes at 25°C, an acid value (solids) of 5 to 10, and a Gardner color of 6 max.
(4) Exkin #2, Tenneco methylethylketoxime.

Normally, white gloss alkyd formulae contain all titanium dioxide with no or very little extender, i.e. clay, and PVC levels are normally very low. A gloss alkyd formula containing 50% clay extender (based on the combined weight of extender and titanium dioxide pigment) at 35 PVC is very uncommon due to poor gloss development by heretofore known paints.

EXAMPLES 3, A and B

In Example 3 an oil-based gloss alkyd enamel formulation was prepared as described in Example 2 using the clay product of Example 1. For comparison, in Example A the competitive material ASP-170 clay (sold by Engelhard Minerals and Chemical Corporation, Menlow Park, Edison, New Jersey) and in Example B the untreated clay HO-90, was substituted on a wt. for wt. basis for the clay prepared pursuant to Example 1. In this comparison each paint formulation was drawn down in a typical manner as described in Example 2 and the 20° gloss was measured and the results are given in Table 6 below:

TABLE 6

| Ex. | 20° Gloss |
|---|---|
| A Competitive Material, ASP-170 | 27.6 |
| B Untreated HO-90 | 14.1 |
| 3 Treated Clay (Example 1) | 28.7 |

EXAMPLES 4 and C

In Example 4 the paint described in Example 2 was drawn down next to an equivalent paint (Example C) made, however, with the untreated clay HO-90 pulverized once and substituted wt. for wt. for the treated clay made pursuant to Example 1. The 20° gloss values were determined and are 37.6 for the paint containing the clay treated pursuant to Example 1 and 27.7 for the untreated HO-90 clay pulverized once.

EXAMPLES 5 and D

A paint (Ex.5) made pursuant to Example 2 was drawn down alongside a paint of equivalent formulation (Ex.D) but made with the competitive material ASP-170 substituted for the treated clay according to Example 1, and the 20° gloss values were measured after the paint dried and hardened. For the paint containing the treated clay, the 20° gloss value was 23.1 and for the paint containing ASP-170, the 20° gloss value was 23.

EXAMPLES 6 and E

In this comparison, a paint similar to that prepared in Example 2 containing clay treated pursuant to Example 1 was drawn down alongside a paint of the identical composition except that untreated clay HO-90, pulverized once, was substituted wt. for wt. for the treated clay. 20° gloss values were determined and found to be 31.4 for the dried paint film made from the paint containing the treated clay (Ex.6) compared to 22.6 for the paint containing the untreated HO-90 clay (Ex.E).

EXAMPLES 7 and F

A product of this invention was produced in the same manner as described in Example 1 with the exception that instead of adding Igepal CO-610, Pluronic L-72 was substituted on a wt. for wt. basis. Pluronic L-72 can be illustrated by the formula

$HO(C_2H_4O)_x(C_3H_6O)_y(C_2H_4O)_zH$

wherein x, y and z are of such relative values that the surfactant possesses an HLB of 6.5.

The resulting dried clay product treated with Pluronic L-72 was then made up into a paint formulation as described in Example 2. The resulting gloss alkyd enamel (Ex.7) was drawn down on a drawdown sheet side by side with an equivalent enamel (Ex.F) using instead the commercial extender ASP-170, representing the best clay extender heretofore. The contrast ratio, reflectance white, 85° gloss, 75° gloss and 20° gloss properties were all measured and the comparative values are given in Table 7. These results demonstrate the comparability of the clay treated with nonionic surfactant with the best available commercial material and illustrate even better gloss properties for the treated clay according to the invention.

TABLE 7

| | Example F ASP-170 | Example 7 Clay Treated With Pluronic L-72 |
|---|---|---|
| Contrast Ratio | 98.2 | 98.1 |
| Reflectance White | 87.1 | 87.2 |
| 85° Gloss (1) | 94.7 | 95.2 |
| 75° Gloss (1) | 95.8 | 97.0 |
| 20° Gloss (1) | 32.0 | 40.6 |

(1) ASTM D523

EXAMPLES 8 and G

A comparison was made of drawdowns of a paint (Ex.8), made as described in Example 7 using HO-90 clay treated with Pluronic L-72 as described in Example 7, with a paint (Ex.G) of the same composition but using instead untreated HO-90 dispersed with ammonium hydroxide and pulverized once. In Example 8 the 20° gloss measurement was 33 whereas in Example G, for the clay HO-90 treated with ammonium hydroxide but not nonionic surfactant, the 20° gloss was 17.9.

EXAMPLES 9, 10 and H

A three-way comparison was made of paints made as described in Example 2 using the same formulations except that in Example H the competitive clay ASP-170 was used, in Example 9 clay HO-90 treated with Igepal RC-520 was used as the clay component, and in Example 10 clay HO-90 treated with Igepal CO-610 as described in Example 1 was used as the clay component. The 20° gloss value for Example H (the competitive material ASP-170) was found to be 36.6. In the case of Exhibit 9 (clay HO-90 treated with RC-520) the 20° gloss value was 26.8. In Example 10 (Clay HO-90 treated with Igepal CO-610) the 20° gloss value was found to be 34.5.

EXAMPLES 11 and J

In each of these examples, a water-based semi-gloss latex paint (25 PVC) was prepared by first mixing the liquid ingredients given in Table 8 below in a high shear premier mill. The solid ingredients set forth in Table 8 were thereafter added to the liquid ingredients and mixing was continued at high speed to grind the ingredients together. In Example J, the clay used was the commercial product ASP-170 sold by Engelhard Minerals and Chemical Corporation. In Example 11, the clay was produced in the manner described in Example 7 utilizing a nonionic surfactant, Pluronic L-72. When a uniform mix was obtained, the ingredients listed in Table 9 were added in the order listed and mixing was continued until a uniform mixture resulted. Thereafter, each of the resulting paints obtained in Examples 11 and J was pulled down on a standard drawdown sheet using a standard drawdown bar and equipment to provide a 0.076mm(3 mil)coating. The paints thus drawn down on the drawdown sheet were allowed to dry for a few hours. Various measurements were made on the films made from the paints and are given in Table 10 below.

TABLE 8

| | Parts By Weight |
|---|---|
| Propylene Glycol | 43.0 |
| Water | 208.0 |
| Colloid 681-F (1) | 2.0 |
| Natrosol (2) | 4.0 |
| Super-Ad-It (3) | 1.0 |
| AMP-95 (4) | 2.0 |
| Tamol 731 (5) | 6.0 |
| CR-800 (6) | 150.0 |
| Clay | 50.0 |

(1) Defoamer
(2) Cellulosic thickener
(3) Preservative
(4) Aminomethylpropanol pigment dispersant
(5) Pigment dispersant
(6) Rutile titanium dioxide

TABLE 9

| | Parts By Weight |
|---|---|
| Texanol (7) | 12.0 |
| Amsco 3011 (8) | 400.0 |
| Colloid 681-F (1) | 1.0 |
| $H_2O$ | 100.0 |
| Natrosol 2% (2) | 100.0 |
| Igepal CO-610 | 2.0 |
| Triton GR-7 (9) | 2.0 |

(1) Defoamer
(2) Cellulosic thickener
(7) Ester alcohol coalescing agent
(8) Vinyl acetate-acrylate copolymer latex (55% solids) sold by Union Chemical Company, Charlotte, N.C.
(9) Sulfonated alkyl ester surfactant to improve wetting of surface being painted

TABLE 10

| | Ex. J | Ex. 11 |
|---|---|---|
| Contrast Ratio (1) | 97.7 | 97.5 |
| Reflectance White (2) | 90.0 | 90.2 |
| 85° Gloss (2) | 84.5 | 85.2 |
| 75° Gloss (2) | 73.8 | 74.6 |
| Tint Reflectance (2) | 26.2 | 26.0 |
| 20° Gloss (2) | 4.5 | 4.5 |
| Soluble Salts | 0.15** | .099* |
| Hegman | 4.0** | 5.0* |

(1) Hiding power, ASTM method D-2805
(2) ASTM D523
* Of the treated clay made pursuant to Example 7
** Of ASP-170

EXAMPLES 12, K and L

Paper coating colors were prepared from the ingredients listed in Table 11. The parts and percentages given in Table 11 are on a weight basis.

TABLE 11

| | Ex. 12 Ex. 1 Treated Clay | Ex. K Lustra 90 | Ex. L Lustra 90 |
|---|---|---|---|
| Formula: Pigment, Parts | | | |
| Clay treated by Example 1 | 100 | - | - |
| Lustra 90 (1) | - | 100 | 100 |
| Binder, Parts | | | |
| Penford 280 Starch (2) | 3.6 | 3.6 | 3.6 |
| Dow 620 Latex (3) | 15.5 | 15.5 | 15.5 |
| Additives, % | | | |
| CMC (Dry on Dry Solids) (4) | 0.10 | 0.10 | 0.10 |
| Parez 707 (Dry on Dry Solids) (5) | 0.75 | 0.75 | 0.75 |

(1) Kaolin clay produced in the same manner as Al-Sil-Ate HO-90 and having the particle size distribution given in Table 11.

(2) Medium viscosity starch.

(3) Carboxylated styrene butadiene copolymer 50% solids by weight having a pH of 6 and a Brookfield viscosity of 95 cps, 100 rpm.

(4) Carboxymethylcellulose thickener.

(5) Methylated trimethylol melamine. Crosslinker for starch to impart waterproofness.

The physical properties and particle size distribution of the treated clay used in Example 12 and the Lustra 90 used in Examples K and L are set forth in Table 12 below.

TABLE 12

Pigment Data

| Product | Ex. 1 Clay | Lustra 90 |
|---|---|---|
| Tests Brightness | | |
| G.E. (Tappi) | 90.2 | 90.6 |
| Elrepho (Absolute) (1) | 87.5 | 88.2 |
| Color (2) | | |
| L | 96.70 | 96.82 |
| a | -0.09 | -0.05 |
| B | 3.45 | 3.08 |
| Y.I. (German) (3) | 6.54 | 5.87 |
| W.I. (Stensby) (4) | 86.08 | 87.43 |
| Particle Size Distribution | | |
| 100% Below Microns | 4.7 | 7.0 |
| % " 5 " | - | 98 |
| % " 2 " | 91 | 90 |
| % " 1 " | 76 | 76 |
| % " 0.5 " | 52 | 54 |
| % " 0.25 " | 23 | 29 |
| Mean (Micron) | 0.48 | 0.45 |

(1) Determined by TAPPI Standard T534 pm 76.

(2) Determined by CIE 1976 (L*a*b*) formula as described in "Color research and application", Vol. 2, No. 1, Spring 1977, pp. 7-11, John Wiley & Sons, Inc.

(3) German Yellowness Index calculated from x, y and z values as measured on Elrepho and standardized as "absolute" with $BaSO_4$.

(4) Calculated as equaling L-3b + 3a.

The resulting formulations were characterized by the properties set forth in Table 13 below.

TABLE 13

| Tests: | Ex. 12 | Ex. K | Ex. L |
|---|---|---|---|
| Solids, % | 59.3 | 59.3 | 62.0 |
| Viscosity Brookfield, Cps No. 3 Sp., 24.44°C (76°F) | | | |
| 100 RPM | 473 | 406 | 640 |
| 50 " | 680 | 616 | 988 |
| 20 " | 1225 | 1160 | 1855 |
| 10 " | 2000 | 1940 | 3110 |
| Hercules "E" Bob, 26.67°C (80°F) | | | |
| Dynes @ 4400 RPM | 30.8 | 15.8 | 26.8 |
| Cps | 53.5 | 72.4 | 46.5 |
| pH | 9.6 | *9.4 | *9.4 |

*Lustra 90 coatings pH adjusted with 1:1 aqueous $NH_4OH$ solution.

In each case the resulting coating formulations were applied (trailing blade, C-I-S, wire side) to 20.43 kg (45 lb), 306.6 $m^2$(3300 $ft.^2$) ream, 82 brightness(Tappi) rawstock at approx. 3.63kg. (8lbs) coat weight. The coated sheets were force dried, cured at 105° C. then conditioned in the constant temperature and humidity room prior to super calendering (2 nips/side, 1000 P.L.I., 65.56° C - 150° F).

Table 14 given below sets forth the test data for the rawstock, and Examples 12, K and L. The gloss brightness and opacity data are given for the pre-calendered and calendered condition of the paper. These data show substantially better ink gloss for the coating made with the clay treated pursuant to the present invention while the other listed properties were at least comparable if not better for the paper coated with the coating containing clay treated pursuant to the present invention as compared to Examples K and L in which the same clay was not treated pursuant to this invention.

TABLE 14

Rawstock and Coated Sheet Data

| Description | Rawstock | Ex. 12 | Ex. K | Ex. L |
|---|---|---|---|---|
| Identification | - | - | Lustra 90 | Lustra 90 |
| Coating Solids,% | - | 59.3 | 59.3 | 62.0 |
| **Tests** | | | | |
| Basis Wt., O.D. | | | | |
| Kg/m2 | 0.064 | 0.076 | 0.076 | 0.076 |
| (Lbs./3300 $ft^2$) | (43.4) | (51.3) | (51.2) | (51.3) |
| Coat Wt., O.D. | | | | |
| Kg/m2 | | 0.012 | 0.012 | 0.012 |
| (Lbs./3300 $ft^2$) | - | (7.9) | (7.8) | (7.9) |
| Gloss: | | | | |
| Pre-calendered | - | 17 | 20 | 21 |
| Calendered | - | 71 | 67 | 67 |
| Brightness: | | | | |
| Pre-calendered | | | | |
| G.E. (Tappi) | 81.8 | 83.9 | 83.2 | 83.1 |
| Elrepho (Abs) | 82.2 | 82.7 | 82.2 | 82.1 |
| Calendered | | | | |
| G.E. (Tappi) | - | 81.8 | 81.4 | 81.2 |
| Elrepho (Abs) | - | 79.2 | 79.1 | 79.0 |
| Opacity, Tappi: | | | | |
| Pre-calendered | 89.8 | 93.6 | 93.0 | 92.8 |
| Calendered | - | 91.3 | 91.0 | 90.8 |
| Color | | | | |
| Calendered | | | | |
| L | - | 92.35 | 92.22 | 92.18 |
| a | - | 0.23 | 0.42 | 0.46 |
| b | - | 2.16 | 2.09 | 2.01 |
| Y.I. (Ger.) | - | 4.54 | 4.56 | 4.44 |
| W.I. (Stensby) | - | 86.54 | 87.20 | 87.50 |
| *Ink Gloss | | | | |
| Calendered | - | 78.4 | 71.7 | 67.8 |
| I.G.T. Pick | | | | |
| No. 7 Tack Ink | | | | |
| Calendered | - | No Pick | No Pick | No Pick |

*Press Conditions:
Impression - 0.15 mm (0.006 in.)
Ink Loading - 1.0CC

Names used herein which are Registered Trade Marks are as follows:

Igepal
Pluronic
Al-Sil-Ate HO
Aroplaz (Table 4)

Aroflat (Table 5)
ASP (Example 3)
Natrosol (Table 8)
Triton (Table 9)
Amsco (Table 9)
Texanol (Table 9)

**Claims**

1. Treated filler clay comprising a mixture of kaolin clay particles and surfactant characterised in that said surfactant consists essentially of an effective amount of non-ionic surfactant compatible with water and oil and having an HLB value of 3 to 15 whereby said treated clay is suited as a filler in organic solvent-based paints or water-based paints to improve the gloss of dried films thereof or in paper coatings to improve the gloss ink holdout properties of paper coated therewith.

2. Treated clay as claimed in claim 1 wherein the non-ionic surfactant has an HLB value of 5 to 14.

3. Treated clay as claimed in claim 1 or 2 wherein the non-ionic surfactant is present in an effective amount up to 5, preferably up to 2, most preferably 0.75 to 1.25, % of the total weight of the clay and surfactant.

4. Treated clay as claimed in any preceding claim wherein said clay product contains less than 0.2 wt. percent soluble salts based on the weight of said product.

5. Treated clay as claimed in any preceding claim wherein the treated clay has a Hegman grind measurement (ASTM Method D-1210) of 5 to 6.

6. Treated clay as claimed in any preceding claim wherein the non-ionic surfactant is selected from (a) nonylphenoxypoly(ethyleneoxy) ethanols of the general formula:

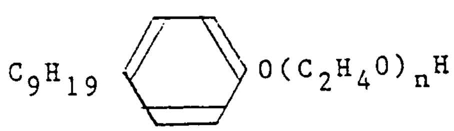

wherein n is an integer of 4 to 12, preferably 7 to 9, and (b) condensation products of ethylene oxide and hydrophobic base formed by condensation of propylene oxide with propylene glycol, which are of the general formula:

$HO(C_2H_4O)_x(C_3H_9O)_y(C_2H_4O)_zH$

wherein x, y and z are numbers of relative values providing an HLB in the range of 3 to 15, preferably 5 to 14.

7. A method of treating clay which comprises mixing an aqueous slurry of clay particles and surfactant and drying the mixture, characterised in that said surfactant consists essentially of an effective amount of non-ionic surfactant compatible with water and oil and having an HLB value of 3 to 15 whereby said treated clay is suited as a filler in organic solvent-based paints or water-based paints to improve the gloss of dried films thereof or in paper coatings to improve the gloss ink holdout properties of paper coated therewith.

8. A method as claimed in claim 7 wherein the aqueous slurry contains alkaline material to increase its fluidity, the alkaline material (e.g.ammonium hydroxide preferably in an amount of 0.15 to 3.0 % by wt. of the dry clay), preferably being sufficiently volatile to be separated from the clay during drying step (b).

**9.** A method as claimed in claim 7 or 8 wherein the dried treated clay is pulverized to provide the product with a 5 to 6 Hegman grind measurement (ASTM Method D-1210).

**10.** A coating material comprising binder, a volatilizable vehicle (e.g. organic liquid or water) and as filler treated clay as claimed in any of claims 1 to 6.

**Revendications**

**1.** Argile de charge traitée comprenant un mélange de particules d'argile de type kaolin et de tensioactif, caractérisée en ce que ce tensioactif consiste essentiellement en une quantité efficace de tensioactif non ionique compatible avec l'eau et l'huile et ayant une valeur HLB de 3 à 15, de telle sorte que cette argile traitée convient en tant que charge dans des peintures à base de solvant organique ou des peintures à base d'eau pour améliorer le brillant des films de celles-ci ou dans des revêtements de papier pour améliorer les propriétés de tenue du brillant de l'encre d'un papier revêtus de ceux-ci.

**2.** Argile traitée suivant la revendication 1, dans laquelle le tensioactif non ionique a une valeur HLB de 5 à 14.

**3.** Argile traitée suivant la revendication 1 ou la revendication 2, dans laquelle le tensioactif non ionique est présent en une quantité efficace allant jusqu'à 5, de préférence jusqu'à 2 et plus avantageusement de 0,75 à 1,25% du poids total de l'argile et du tensioactif.

**4.** Argile traitée suivant l'une quelconque des revendications précédentes, dans laquelle cette argile produite contient moins de 0,2% en poids de sels solubles par rapport au poids de ce produit.

**5.** Argile traitée suivant l'une quelconque des revendications précédentes, dans laquelle cette argile traitée à une mesure de broyage Hegman (méthode ASTM D-1210) de 5 à 6.

**6.** Argile traitée suivant l'une quelconque des revendications précédentes, dans laquelle le tensioactif non ionique est choisi parmi (a) des nonylphénoxypoly(éthylèneoxy)éthanols de formule générale:

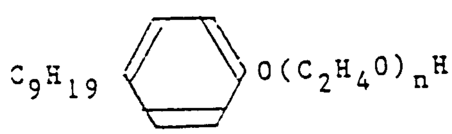

dans laquelle n est un entier de 4 à 12, de préférence de 7 à 9 et (b) des produits de condensation d'oxyde d'éthylène et d'une base hydrophobe formée par condensation d'oxyde de propylène avec du propylène glycol, qui sont représentés par la formule générale:

$HO(C_2H_4O)_x(C_3H_9O)_y(C_2H_4O)_zH$

dans laquelle x, y et z sont des nombres de valeurs relatives fournissant une valeur HLB de 3 à 15, de préférence de 5 à 14.

**7.** Procédé pour traiter une argile qui comprend le mélange d'une boue aqueuse de particules d'argile et de tensioactif et le séchage du mélange, caractérisé en se que ce tensioactif consiste essentiellement en une quantité efficace de tensioactif non ionique compatible avec l'eau et l'huile et ayant une valeur HLB de 3 à 15, de telle sorte que cette argile traitée convient en tant que charge dans des peintures à base de solvant organique ou des peintures à base d'eau pour améliorer le brillant des films de celles-ci ou dans des revêtements de papier pour améliorer les propriétés de tenue du brillant de l'encre d'un papier revêtus de ceux-ci.

**8.** Procédé suivant la revendication 7, dans lequel la boue aqueuse contient une matière alcaline pour augmenter sa fluidité, la matière alcaline (par exemple, l'hydroxyde d'ammonium de préférence en une quantité de 0,15 à 3,0% en poids de l'argile sèche), étant de préférence suffisamment volatile pour être séparée de l'argile pendant l'étape de séchage (b).

**9.** Procédé suivant la revendication 7 ou la revendication 8, dans lequel l'argile traitée est pulvérisée pour fournir le produit ayant une mesure de broyage Hegman de 5 à 6 (méthode ASTM D-1210).

**10.** Matériau d'enduction comprenant un liant, un véhicule volatilisable (par exemple, un liquide organique ou de l'eau) et en tant que charge, une argile traitée suivant l'une quelconque des revendications 1 à 6.

**Patentansprüche**

**1.** Behandelte Fülltone, welche eine Mischung aus Kaolinerdeteilchen und oberflächenaktivem Mittel umfaßt, dadurch gegekennzeichnet, daß das oberflächenaktive Mittel im wesentlichen aus einer wirksamen Menge eines nicht-ionischen oberflächenaktiven Mittels besteht, das mit Wasser und Öl verträglich ist und einen HLB-Wert von 3 bis 15 hat, wodurch der behandelte Ton als Füllstoff in Farben auf Basis organischer Lösungsmittel oder Farben auf Wasserbasis zur Verbesserung des Glanzes getrockneter Filme davon oder in Papierbeschichtungen zur Verbesserung beschriftungsbeständiger Glanzeigenschaften von damit beschichtetem Papier geeignet ist.

**2.** Behandelter Ton nach Anspruch 1, worin das nicht-ionische oberflächenaktive Mittel einen HLB-Wert von 5 bis 14 hat.

**3.** Behandelter Ton nach Anspruch 1 oder 2, worin das nicht-ionische oberflächenaktive Mittel in einer wirksamen Menge von bis zu 5, vorzugsweise von bis zu 2, am meisten bevorzugt von 0,75 bis 1,25 % des Gesamtgewichts des Tons und oberflächenaktiven Mittels zugegen ist.

**4.** Behandelter Ton nach einem der vorstehenden Ansprüche, worin das Tonprodukt weniger als 0,2 Gew.-% lösliche Salze enthält, bezogen auf das Gewicht des Produkts.

**5.** Behandelter Ton nach einem der vorstehenden Ansprüche, worin der behandelte Ton einen Hegman-Mahlwert (ASTM-Methode D-1210) von 5 bis 6 hat.

**6.** Behandelter Ton nach einem der vorstehenden Ansprüche, worin das nicht-ionische oberflächenaktive Mittel aus (a) Nonylphenoxypoly(ethylenoxy)ethanolen der allgemeinen Formel

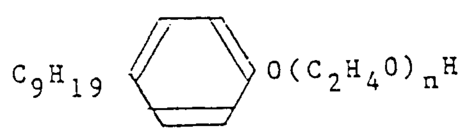

worin n eine ganze Zahl von 4 bis 12, vorzugsweise 7 bis 9, ist, und (b) Kondensationsprodukten von Ethylenoxid und einer durch Kondensation von Propylenoxid mit Propylenglykol gebildeten hydrophoben Basis, die die allgemeine Formel hat

$HO(C_2H_4O)_x(C_3H_9O)_y(C_2H_4O)_zH$

worin x, y und z Zahlen relativer Werte sind, die einen HLB-Wert im Bereich von 3 bis 15, vorzugsweise 5 bis 14, ergeben, ausgewählt ist.

**7.** Verfahren zur Behandlung von Ton durch Mischen einer wässrigen Aufschlämmung von Tonteilchen und oberflächenaktivem Mittel und Trocknen der Mischung, dadurch gekennzeichnet, daß das oberflächenaktive Mittel im wesentlichen aus einer wirksamen Menge eines nicht-ionischen oberflächenaktiven Mittels besteht, das mit Wasser und Öl verträglich ist und einen HLB-Wert von 3 bis 15 hat, wodurch der behandelte Ton als Füllstoff in Farben auf Basis organischer Lösungsmittel oder in Farben auf Wasserbasis zur Verbesserung des Glanzes getrockneter Filme davon oder in Papierbeschichtungen zur Verbesserung der beschriftungsbeständigen Glanzeigenschaften von damit beschichtetem Papier geeignet ist.

**8.** Verfahren nach Anspruch 7, worin die wässrige Aufschlämmung alkalisches Material zur Erhöhung ihrer Fluidität enthält, wobei das alkalische Material (beispielsweise Ammoniumhydroxid vorzugsweise in

einer Menge von 0,15 bis 3,0 Gew.-% des trockenen Tons) vorzugsweise vollständig flüchtig ist, daß es während des Trocknungsschrittes (b) von dem Ton abgetrennt werden kann.

**9.** Verfahren nach Anspruch 7 oder 8, worin der getrocknete behandelte Ton zur Erzielung eines Produkts mit einem Hegman-Mahlwert (ASTM-Methode D-1210) von 5 bis 6 pulverisiert wird.

**10.** Beschichtungsmaterial, welches ein Bindemittel, einen verflüchtigbaren Träger (beispielsweise eine organische Flüssigkeit oder Wasser) und als Füllstoff behandelten Ton nach einem der Ansprüche 1 bis 6 umfaßt.